# EUROPEAN PATENT SPECIFICATION

(11) **EP 1 808 830 B1**
(45) Date of publication and mention of the grant of the patent: **06.04.2011**
(21) Application number: 07003780.9
(22) Date of filing: 23.02.2007
(51) Int. Cl.: G07F 7/10, G06Q 20/00, G06K 7/00

(54) **Fraud detection system for point-of-sale terminals**
Betrugserkennungssystem für Kassenterminals
Système de détection de fraude pour des terminaux d'un point de vente

(43) Date of publication of application: 18.07.2007
(73) Proprietor: First Data Corporation, Greenwood Village, CO 80111 (US)
(72) Inventor: Haider, Gerald, Dipl.-Ing., 3762 Ludweis (AT); Krebs-Florian, Wolfgang, Mag., 1190 Wien (AT); Nirschl, Heinrich, Dipl.-Ing. Dr., 1230 Wien (AT)
(74) Representative: Katérle, Axel

(56) References cited:
- WO-A-03/060832
- GB-A- 2 188 180
- US-A- 5 428 684
- US-A1- 2003 132 292
- US-B1- 6 234 389
- US-B1- 6 715 078

## Description

### Field of the invention

The invention generally relates to fraud detection techniques for systems involving secure electronic transactions, such as an electronic payment system. In particular, the invention relates to techniques for detecting fraud by detecting manipulations done to a terminal used in such secure systems, such as a Point-of-Sale, or Point-of Service, terminal.

### Background of the invention

As a convenient means for processing electronic payment transactions, Point-of-Sale (POS) terminals are used by businesses of all kinds and sizes, especially merchants in the retail environment. To conduct a electronic payment transaction by means of a POS terminal, a payment card is usually used. The payment card may be a credit card, a debit card, and the like. Financial and/or personal information is usually encoded on the card, in the form of a magnetic strip, an embedded chip, an embossed number sequence, or any combination of the above. For example, the number sequence embossed on the card may indicate the account number of the legal card holder; this number is almost always used in payment transactions.

Along with the convenience and comfort of conducting payments with a card comes also the serious concern of card fraud. Using various illegitimate means, fraudsters would usually obtain the information encoded on or embedded in the card and sometimes even the personal identification number (PIN) associated with the card. Such information allows the fraudsters to make a fake card, or a copy card, or a skimmed card, which carries exactly the same financial and/or personal data as the genuine card. The fraudsters can then use the fake card for all kinds of fraudulent activities such as purchase, electronic cash transfer, faking identity, and so on. Sometimes, staggering losses may have occurred before the genuine card holder realizes the fraud.

One way for fraudsters to obtain information from payment cards is associated with POS terminals. Since a large number of payment cards may be used on a POS terminal everyday, fraudsters could steal information from the payment cards by installing certain harware and/or software - hereafter referred to as "spyware" - on the POS terminal; such spyware is capable of intercepting payment related information from the cards when they are used on the POS terminal.

Of course, in order to install the spyware on the POS terminal, the fraudsters must somehow manipulate the physical components of the terminal, e.g. opening of the terminal housing, disconnecting the data interface, and so on. A typical manipulation scenario looks like this: a fraudster breaks into a shop at night, say 02:30am, when the shop is not open for business. At 02:35am, he powers off the terminal and opens its housing; at 02:37am, the housing is successfully opened. The fraudster then powers on the terminal to see whether the terminal can still be powered on normally. If yes, the fraudster powers off the terminal again, say at 02:38am, and installs a spyware on the terminal. At 02:48am, the installation is finished and the fraudster powers on the terminal again. Next, at 02:51am, the fraudster inserts a test card into the card-reading interface of the terminal to test whether the installed spyware can read and record information from the test card. Before conducting this card-reading test, the fraudster may disconnect the data interface of the terminal so that no payment transaction can be transmitted along the data interface to any payment service provider. When the test is completed, the fraudster withdraws the test card, reconnects the data interface, closes the housing, and leaves the shop. A few days later, after the spyware has collected enough data from a large number of payment cards, the fraudster revisits the shop and obtains the data collected by the spyware. The collected data is then used to produce fake cards.

Of course, there are fraud detection techniques in existence for identifying fake cards. A common example is to analyze card transaction records for suspicious activity. However, these techniques are usually "post-fraud" measures, which can only detect fraud after a fake card has been produced and is already in circulation. This means, however, data from the genuine card has already been stolen. Of course, this data loss puts the legal card holder, the payment service provider, and/or the issuing bank of the card under considerable financial risk. Moreover, once it is found that a fake card is in circulation, the card number must be black-listed and the genuine card must be replaced; these activities cause administrative overhead for the card issuer as well as additional inconvenience for the legal card holder.

Consequently, it is important to provide new techniques for detecting POS-terminal-related card fraud as early as possible, preferably before any real loss of card information takes place.

US 6,715,078 B1 discloses a system and methods for implementing the PIN encryption device which may be incorporated into a customer transaction terminal such as a POS terminal. The PIN encryption device securely stores PIN encryption keys and PIN encryption algorithms that are used for encrypting user entered PINs on cryptographic smart cards. The system also protects the cryptographic smart cards from tampering, and prevents the discovery of PIN data by tapping the external interfaces of the customer transaction terminal.

US 2003/132292 A1 relates to a transaction terminal featuring a tamper detection security measure by using a secure IC chip including integrated RAM, ROM and CPU, wherein the encryption keys which the transaction terminal may use for PIN encryption are stored in the RAM, and the encryption algorithm is stored in the ROM and the algorithm is executed by the CPU. Further, the main body of the transaction terminal includes an upper module and a lower module interfaced to each other with the main circuit board of the terminal in-between. The main circuit board comprises contact security washers serving as conductive bridges. If any attempt is made to remove any part of the upper module from the lower module, electrical contact between conductive sections of at least one of the open contact washers will almost certainly be destroyed thereby to trigger the generation of a tamper signal. The tamper signal operates to disconnect the secure IC chip from the power supply or results in an erasure of the encryption information from the IC chip.

US 5,428,684 relates to a key control method for use in an electronic cashless transaction system including a bank centre, a store transaction terminal, and an IC card being used as an electronic cashless transaction medium.

GB 2 188 180 relates to terminal apparatus for use in an electronic funds transfer at point of sale (EFT-POS) system. The EFT-POS terminal apparatus is constructed in two parts with a tamper resistant EFT-POS card holder unit communicating via a standard interface with a retailer's unit which provides the retailing operations and the necessary communication to an EFT-POS network.

### Summary of the Invention

The present invention provides solutions to the detecting of POS-terminal-related card fraud at an early stage. By detecting events or happenings occurred to a POS terminal, in particular the housing and the external interfaces thereof, it is possible to determine whether a potential fraudulent manipulation has occurred.

The term "event" as used in this invention shall be understood to indicate any happenings occurred to any constituting component of the terminal. The event may be of a physical nature or a non-physical one, caused by any external force or by the terminal itself, performed manually or without human intervention, done with hardware or software, through a direct contact with the terminal or via a remote one, and so forth. Examples of the events include, but are not limited to, happenings - such as removal, attachment or re-attachment, disconnection, connection or reconnection, opening or closing, etc. - of the housing or any one of the external interfaces of the terminal.

The term "card" or "payment card" as used in this invention shall be understood as a synonym for any machine-readable item, device, or object accepted by a card-reading terminal as a means for authenticating the card holder and verifying his/her eligibility to perform electronic payments. However, the invention can also be applied to secure systems other than electric payment systems: Automated Teller Machines (ATMs) is one example; building security systems such as entry/exit by means of door cards is another example. In short, the invention is applicable to any security system which requires the use of a "card" - a machine-readable item, device, or object, which is accepted by a card-reading machine - as a means for authenticating the card holder and/or verifying his/her eligibility to perform certain security-related conducts.

Since the determination of potential fraudulent manipulations can be conducted as soon as the events have occurred, i.e. it is not necessary to wait until card data has been lost and fake cards are already in circulation, the invention can facilitate an early prevention of data loss. For example, if it is determined that the chance of a manipulation is high, the POS terminal in question can be immediately suspended from carrying out any future payment transactions. Thus, any potential card information leak from this POS terminal can be effectively prevented.

According to a first aspect of the invention, a POS terminal for performing electronic payment transactions is provided. The terminal is associated with one or more terminal identifiers which uniquely identify the terminal. The terminal comprises a housing and multiple external interfaces. The terminal further comprises at least one detector which can detect an event occurred to the terminal. Further, the terminal comprises a processor which can create, or generate, in reaction to the detected event, an event message indicating the occurrence of the event. The event message comprises an event code associated with the event, a time stamp indicating the time when the event occurred, and at least one terminal identifier. Once generated, the event message is output from the terminal by a message interface. Alternatively, the event message may be stored at the terminal locally for later output via the message interface. The message interface is one of the external interfaces of the terminal.

According to a second aspect of the invention, a method for detecting hardware manipulation of a POS terminal is provided. The terminal is associated with at least one terminal identifier, which can uniquely identify the terminal. The terminal comprises a housing and multiple external interfaces. The method is made up of at least the following steps: detecting an event occurred to the housing or at least one external interface of the terminal; generating, based on the detected event, an event message which comprises an event code associated with the event, a time stamp indicating the time when the event occurred, and at least one terminal identifier; and outputting the event message via one of the external interfaces of the terminal.

According to a third aspect of the invention, the method above can be practiced in the form of hardware, software, or a combined hardware/software approach. As for a software aspect, a computer program product is provided. The computer program product comprises program code portions for performing the steps of the method when the computer program product is run on one or more computing devices, preferably on the POS terminal. The computer program product may be stored on a computer-readable recording medium.

According to a fourth aspect of the invention, a device for processing event messages is provided. The event message is such a message that comprises an event code associated with an event occurred to a housing or an external interface of a POS terminal, a time stamp indicating the time when the event occurred, hereafter referred as to the event-occurrence-time, and at least one terminal identifier of a POS terminal. The device comprises a first interface adapted to receive one or more of such event messages. The device also comprises a processor which is capable of performing the following activities: selecting a set of event messages having a same terminal identifier; ordering the event codes in the set of event messages into a sequence according to the time stamps in the event messages; reading one or more patterns, wherein each pattern comprises a sequence of event codes; determining whether the ordered sequence of event codes matches at least one of the patterns; and, when a match is found, generating a notification message. The device further comprises a second interface adapted to output the notification message.

According to a fifth aspect of the invention, a method for processing event messages is provided. An event message comprises an event code associated with an event occurred to an external interface or a housing of a POS terminal. The event message also comprises a time stamp indicating the time when the event occurred and at least one terminal identifier of a POS terminal. The method comprises the following steps: receiving one or more of such event messages; selecting a set of event messages having a same terminal identifier; ordering the event codes in the set of event messages into a sequence according to the time stamps in the event messages; reading at least one pattern, wherein the pattern comprises a sequence of event codes; determining whether the ordered sequence of event codes matches said at least one pattern; and, when a match is found, generating a notification message.

According to a sixth aspect of the invention, the method according to the fifth aspect above can be practiced in the form of hardware, software, or a combined hardware/software approach. As for a software aspect, a computer program product is provided. The computer program product comprises program code portions for performing the steps of the method when the computer program product is run on one or more computing components, preferably on the device. The computer program product may be stored on a computer-readable recording medium.

### Brief Description of the Drawings

In the following, the invention will be described with reference to exemplary embodiments illustrated in the drawings, wherein:
- Fig. 1: is a schematic block diagram illustrating an embodiment of a terminal according to the invention;
- Fig. 2: shows an example of event messages and examples of event-code sequences according to the invention;
- Fig. 3: is a flow chart illustrating an embodiment of a first method, for detecting hardware manipulations of a POS terminal, according to the invention;
- Fig. 4: is a schematic block diagram illustrating an embodiment of a device for processing event messages according to the invention;
- Fig. 5: shows two patterns according to the invention; and
- Fig. 6: is a flow chart illustrating an embodiment of a second method, for processing event messages, according to the invention.

### Detailed Description of the Drawings

In the following description, for purposes of explanation and not limitation, specific details are set forth, such as particular sequences of steps, particular interfaces, and particular configurations, in order to provide a thorough understanding of the invention. It will be apparent to one skilled in the art that the invention may be practiced in other embodiments which depart from these specific details. The one skilled in the art will further appreciate that, while the invention is primarily described in the form of methods and apparatuses, the invention may also be embodied in computer program products as well as in systems comprising a computer processor and a memory coupled to the processor, wherein the memory is encoded with one or more programs which may, when executed by the processor, perform the functions enclosed herein.

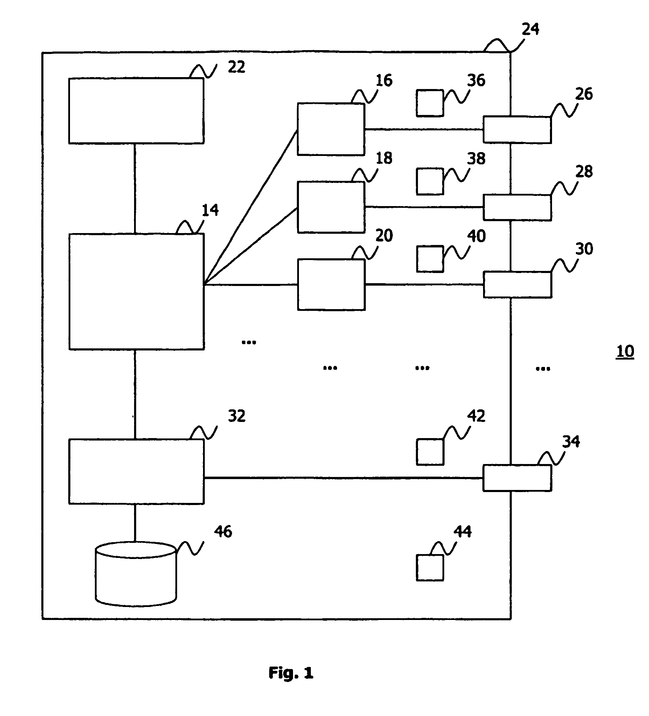

Fig. 1 illustrates a POS terminal 10 according to the invention. The POS terminal 10 consists of several internal modules or components: an application processor 14, a power module 16, a communication module (modem) 18, a card-reading module 20, and a hardware security module (HSM) 22. Other modules or components (not shown in Fig. 1) such as a so-called PIN pad, a display, and a printer - which are input/output devices for facilitating the man-machine interaction between the terminal and the user - may also be included. For physical protection, these modules are arranged within a housing 24 (or a cover, a frame, a case, etc.) of the terminal. Some of these modules are coupled to interfaces 26, 28, 30 which interact with the external environment. Holes or openings are usually provided on the housing to allow these external interfaces to pass through. The power module 16, for example, which manages power supply for the terminal, is connected with a power interface 26. The power interface may be a wire or cable for feeding power to the terminal from an external power source (not shown in Fig. 1). The communication module 18 is linked with a communication interface, or a data interface 28, over which electronic-payment-related data is transmitted between the terminal and a payment service provider. In one embodiment, the data interface may be a data cable or a data wire; a wireless data interface may also be used. The card-reading module 20 is coupled to a card-reading interface 30, which is usually in the form of a narrow opening such as a slot and which comes into contact with a payment card when an electronic payment transaction is to be made. The contact may be of a physical, electrical, magnetic, and/or optical nature. Some of the internal modules of the terminal do not need to be coupled to any external interfaces. The application processor 14 and the HSM 22, for example, are securely enclosed within the housing 24 and not directly in contact with any external interfaces. The HSM contains hardware and/or software components for performing authentication and cryptographic functionalities. Typically, the PIN pad is integrated with the HSM. In some cases, the application processor is integrated within the HSM.

A payment transaction by means of the POS terminal typically begins with the entry of the amount of payment - this entry is done either manually or automatically from an electronic cash register. Then, a payment card is swiped or inserted through the card reading interface 30 of the terminal. (In some cases, the payment card is swiped before the payment amount is entered.) The card-reading module 20 then reads, or retrieves, payment related information from the card. The PIN-pad of the terminal allows the input of a personal identification number (PIN) on a numeric keyboard or pad, if such is required. Based on the payment related data read from the card, the entered PIN, and perhaps additional relevant transactional information, the terminal processes the transaction in an on-line or an off-line manner.

In the on-line scenario, the terminal, or more specifically, the application processor 14 thereof, initiates an electronic payment transaction to be transmitted to a processing system, which is normally the payment processor of a payment service provider. The transmission of the payment transactional data is handled by the communication module 18 and the data interface 28. The payment processor receives the payment transaction, processes it, and finally returns either a "transaction OK" or a "transaction fail" type of message to the terminal.

In the off-line case, the terminal can authorize the transaction locally and submit the payment transactional data, to the payment service provider at a later stage, say, at the end of the day. The transmission of the payment transactional data is handled by the communication module 18 and the data interface 28.

In addition to the above components and functionalities, the POS terminal 10 is associated with at least one identifier for identifying the terminal. The identifier may be of a physical nature, i.e., the identifier is a terminal-unique identifier such as a serial number or a serial code. Another type of terminal identifier is a logical identifier, which is usually associated with the merchant who owns (or leases) and uses the terminal to communicate with his payment service provider for performing electronic payment transactions. A payment service provider usually serves a large number of merchants; to identify one merchant from anther, the payment service provider usually assigns an identifier to each merchant. This identifier is the so-called "logical identifier" for POS terminals. Of course, it is possible to use any other type of terminal identifier which can uniquely identify a terminal in-use from another one in-use. Any combinations of the above terminal identifiers can also be used.

The POS terminal 10 further comprises a message processor 32 which is capable of creating an event message based on an event detected to have occurred to the POS terminal. Details of event messages and the relevant functioning of the message processor 32 will be described below. The message processor 32 may be a dedicated processor, or it may be integrated with the application processor 14.

The terminal 10 further comprises one or more detectors 36, 38, 40, 42, 44, which can detect at least one kind of event which occurs to the housing 24 or at least one of the external interfaces 26, 28, 30, 34 of the terminal.

Among the detectors may be a power detector 36 which can detect changes of power supply on the power interface 26. For instance, the detector 36 can detect whether on-going power supply suddenly stops or, in the opposite case, power supply is resumed. That is to say, the power detector can detect a change of power supply from either "on" to "off" as well as a change from "off" to "on". An example of the power detector can be an electronic circuit that triggers when the voltage of the power supply drops below a certain threshold. Other mechanisms are also possible. Furthermore, the power detector can be configured to detect a removal of the power interface 26 from the terminal and/or an attachment (or a re-attachment) of the power interface to the terminal. For example, a mechanical switching device can detect the removal of the power interface. With this capability, the power detector can react to such events as an un-plug of the power interface from an external power source, a plug-in of the power interface to an external power source, a cut, e.g. a wire cut or a cable cut, of the power interface, a re-joining of the cut power interface, a detachment of the power interface from the terminal, and an attachment (or a re-attachment) of the power interface to the terminal, and the like. Therefore, when someone, a fraudster for example, manipulates the POS terminal by tampering with the power interface, such tampering will be detected.

A data connection detector 38 can be provided for detecting events occurred to the data interface 28. For instance, the data connection detector 38 can detect the status of data transmission over the data interface 28 such as the following: Is there a sudden stop, or discontinuation, of an on-going data transmission? Is there a start, or a re-start, of data transmission? Is there a removal of the data interface 16 from the terminal? Is there an attachment (or a re-attachment) of the data interface to the terminal? The above detecting functions may be achieved by some hardware (e.g. electronic circuit) and/or software implemented in the data connection detector for detecting the interruption of a low-level data communication protocol. Specific techniques could be the sensing of heart beat signals, the checking of current loops, or the detection of a certain voltage that must be present on a pin. In addition, the data connection detector could also comprise a switching device of a mechanical type which can detect the removal of the data interface from the terminal. Having equipped with such detecting functionality, the terminal 10 is able to detect any manipulation of the terminal by way of tampering with the data interface.

Another detector 40, a card-reading detector, may be provided to detect whether information from a payment card has been read, or retrieved, by the card-reading interface or by the card reader module. For instance, when dealing with cards with magnetic strips, the reading head of the card-reading interface can be set in a passive mode but kept on; once a card is swiped, the reading head will deliver the signals read from the card. In the case of chip cards, the card-reading interface may be equipped with a micro switch which can detect the insertion of a card. The retrieved information from the card is usually payment related, such as the card number.

In a normal on-line type of operation, when payment related data is read from the card, the data is forwarded to the application processor 14 which accordingly initiates a payment transaction to be transmitted to a payment service provider. The payment transactional data is output via the data interface 28. However, when someone, a fraudster, for example, wants to carry out some test-reads of cards on the terminal which is on the on-line mode without causing any payment transactional data to be transmitted, he needs to disable the data transmission function of the data interface 28 before he swipes his test card through the card-reading interface. Thus, it may happen that a retrieval of payment related data from a payment card is NOT followed by an output of payment transactional data from the data interface 28. The card-reading detector 40, together with the data connection detector 38, may detect such "card testing" events.

In another situation i.e. the off-line scenario, where the terminal is not to initiate the transmission of payment transactional data even after reading the payment transactional data from the card, such "card testing" events can be detected by taken into consideration of the card-reading activity and the lack of some other normal activities. These normal activities may be an entry of a PIN code, an entry of a payment amount, an acknowledgement of the entered payment amount by pressing an OK button, etc. For instance, on some terminals, POS transactions can only be triggered with an entry of a payment amount prior to the reading of a payment card. Thus, if a "card-read" activity is detected by the card-reading detector 40 but no payment amount has been entered before, this could be interpreted as a "card testing" event performed by a fraudster.

Furthermore, the card-reading detector 40 may also be configured to detect a removal and/or an attachment (or a re-attachment) of the card-reading interface from/to the terminal. A mechanical switching device may be adequate to perform such detection.

According to the invention, in addition to the power interface 26, the data interface 28, and the card-reading interface 30, the POS terminal 10 comprises yet another external interface 34, termed as a message interface, for outputting the event messages generated by the message processor 32. The functioning of the message interface 34 is similar to that of the data interface 28 in many ways. Thus, although the message interface 34 may be a dedicated interface, it can also be integrated with the data interface 28.

Likewise, a message detector 42 may be provided to detect events occurred to the message interface 34. These events are similar in nature as those occurred to the data interface 28.

The terminal 10 may further comprise a housing-detector 44 for detecting any events occurred to the housing 24 of the terminal. Specifically, when the housing, or any part thereof, is opened or closed, or when any part of the housing is removed or attached (or re-attached), the housing-detector 44 is able to detect it. In this way, any tampering with the housing can be detected. Further, the terminal can be adapted to immediately erase the secure information. e.g. cryptographic keys, contained in the HSM when the detector 44 detects a tampering of the housing.

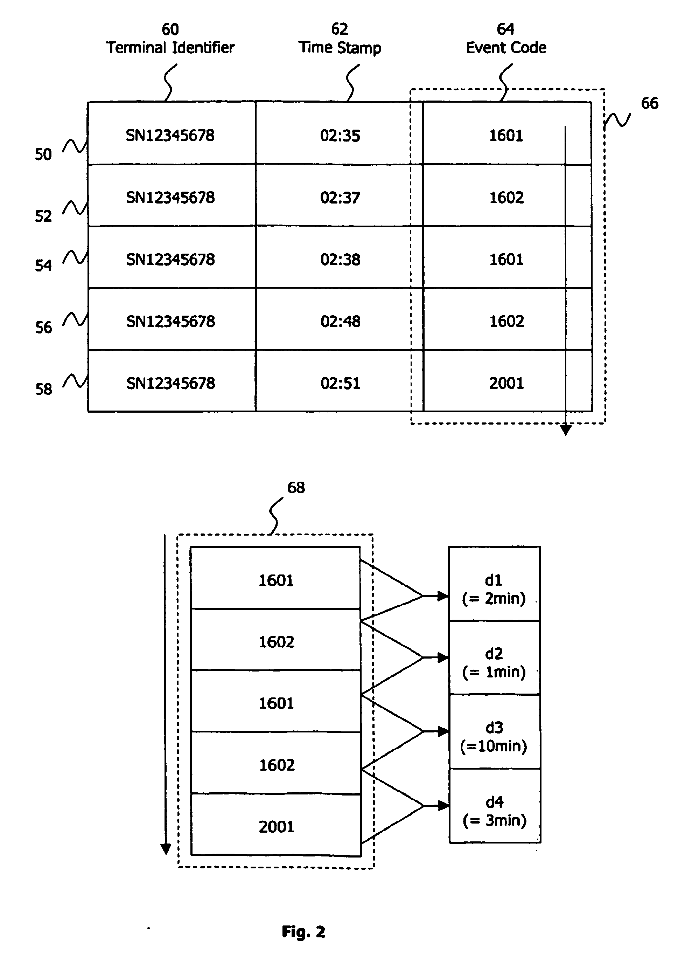

The message processor 32 will now be described in detail with reference to Fig. 2, which illustrates an exemplary event message which can be generated by the message processor 32.

According to the invention, after any of the detectors detects a certain event, the message processor 32 reacts to this detection by generating a corresponding event message to record the occurrence of this event. As examples, a set of event messages 50, 52, 54, 56, 58 with the same structure are shown in Fig. 2. The basic structure of an event message comprises three fields 60, 62, and 64. The first field 60 contains a terminal identifier; for instance, the terminal's serial number SN12345678, as shown in the figure. Of course, the field 60 may contain any other identifier associated with the terminal, such as its logical identifier, a combination of its serial number and its logical identifier, etc. The second field 62 of the event message contains a time stamp which indicates the time that the event occurred. Generating time stamps is a known technology in the art. The third field 64 contains a so-called "event code". The event code is a code associated with the event; the event code indicates what kind of event it is. For example, in the event messages 50 and 54, the event code is 1601, which may indicate a "power off" event; in the event messages 52 and 56, the event code is 1602, which may indicate a "power on" event; in the event message 58, the event code is 2001, which may indicate a retrieval of information from a card but without a subsequent output of payment transactional data via a data interface of a POS terminal. In brief, any kind of event detectable by the (detectors of the) terminal is associated with a unique event code. When the message processor creates an event message based on a certain detected event, the associated event code is included in the message.

The event message may comprise additional fields for recording other information associated with the detected event and/or the terminal. For example, the power consumption of the terminal, the length of a power-off period, and so on, may be included in the event message.

The event message may be output as soon as it is generated, or it can be stored in a memory or buffer 46 of the terminal for a pre-defined period of time before it is output. Furthermore, the memory or buffer 46 may store a plurality of event messages, and the plurality of event messages can then be output by the message interface 34.

As mentioned above, the message processor 32 may be a dedicated processor, or it may be integrated with the application processor 14. In the latter case, the processor 32 is further capable of initiating an electronic payment transaction based on payment related data retrieved from a payment card.

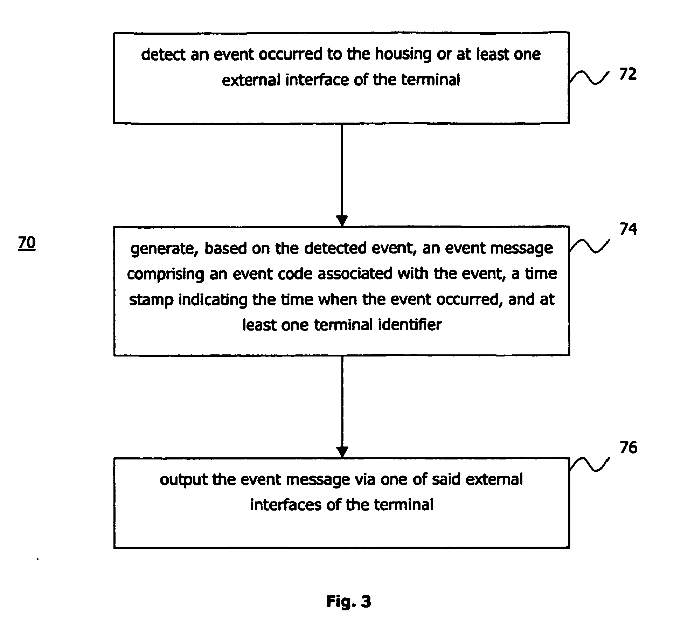

Referring to Fig. 3, an embodiment of a first method 70 for a POS terminal will now be explained. In order to provide a more thorough understanding, the method 70 will be exemplary described in relation to the POS terminal 10 of Fig. 1 and the event messages shown in Fig. 2. However, it should be noted that the method 70 can also be practiced in combination with a POS terminal having a different configuration from that of Fig. 1; the method can also be practiced in combination with event messages having a different structure from that shown in Fig. 2.

The method 70 aims at detecting hardware manipulation of a POS terminal 10 wherein the terminal is associated with at least one terminal identifier and comprises a housing 24 and multiple external interfaces 26, 28, 30, and 34.

The method 70 starts with step 72, where the POS terminal by means of one or more of the detectors 36, 38, 40, 42, or 44, detects an event occurred to the housing 24 or one of the external interfaces 26, 28, 30, and 34 of the terminal. As described above, the event may be, but not limited to, any of the following: a removal of any one of the external interfaces or any part of the housing from the terminal; an attachment (or a re-attachment) of any of the external interfaces or any part of the housing to the terminal; a change of power supply over the power interface 26 from on to off, i.e. a "power off" event; a change of power supply over the power interface 26 from off to on, i.e. a "power on" event; a discontinuation or interruption of data transmission over the data interface 28; a start (or re-start) of data transmission over the data interface 28; a discontinuation or interruption of message transmission over the message interface 34; a start (or re-start) of message transmission over the message interface 34; a retrieval of payment related data from a payment card by the card-reading interface 30 or by the card-reading module 20 but without a subsequent output of payment transactional data via a data interface 28; an opening of any part of the housing 24; a closing of any part of the housing 24; an increase in the terminal's power consumption by a first pre-defined level (500 milliwatts for example); a decrease in the terminal's power consumption by a second predefined level (300 milliwatts for example), wherein the first and the second pre-defined level may be the same or different. It should be pointed out here that variations in the terminal's power consumption may indicate the running of additional hardware/software, e.g. spyware, on the terminal.

At the next step 74, the terminal generates an event message 50 according to, or based on, the detected event. The event message 50 contains an event code 1601 associated with the event, i.e. the event code identifies or indicates the type, or kind, or nature, of the event; the event message 50 also contains a time stamp 02:35 indicating the time when the event occurred; the event message 50 further comprises at least one terminal identifier SN12345678. With the event code, the time stamp, and the terminal identifier, the event message 50 uniquely defines the event.

Finally, at step 76, the generated event message is output via one of the external interfaces of the terminal. This interface may be a dedicated interface 34 specifically for the transmission of event messages; but it can also be the data interface 28, which the POS terminal uses to output payment transactional data to a payment service provider.

Although the event message may be output as soon as it is generated, the method 70 may comprise a step wherein the event message is stored or buffered, for a predefined period of time, before it is output from the terminal. Furthermore, a plurality of stored or buffered event messages may be output, either in series or simultaneously.

The method 70 can be practiced in the form of hardware, software, or a combined hardware/software approached. In a software aspect, a computer program product is provided. The computer program product comprises program code portions for performing the steps of the method 70 when computer program product is run on one or more computing devices. Preferably, the computer program product is run on the message processor 32 of the terminal 10. The computer program product may be downloaded from a remote device, e.g. from a payment processing server of a payment service provider, to the message processor 32 through any of the terminal's external interfaces, the data interface 28 or the message interface 34, for example. Particularly helpful is that, when a terminal is not equipped with the message processor 32, the computer program product can be downloaded to the application processor 14 and to be executed there. Such a downloading scheme allows conventional terminals to acquire the capability of performing the method 70 without any replacement, upgrade, or reconfiguration of the terminal, in particular the processor 14 thereof.

Summarizing the description for the POS terminal 10 and the corresponding method 70, it can be appreciated that, by detecting and recording the events which occur to the housing and the multiple external interfaces of the terminal, it is possible to detect any possible terminal manipulation, which almost always involves the tampering of the housing and/or any of the external interfaces. Thus, the POS terminal 10 as well as the method 70 according to the invention can facilitate a early detection of potential hardware manipulation of the terminal.

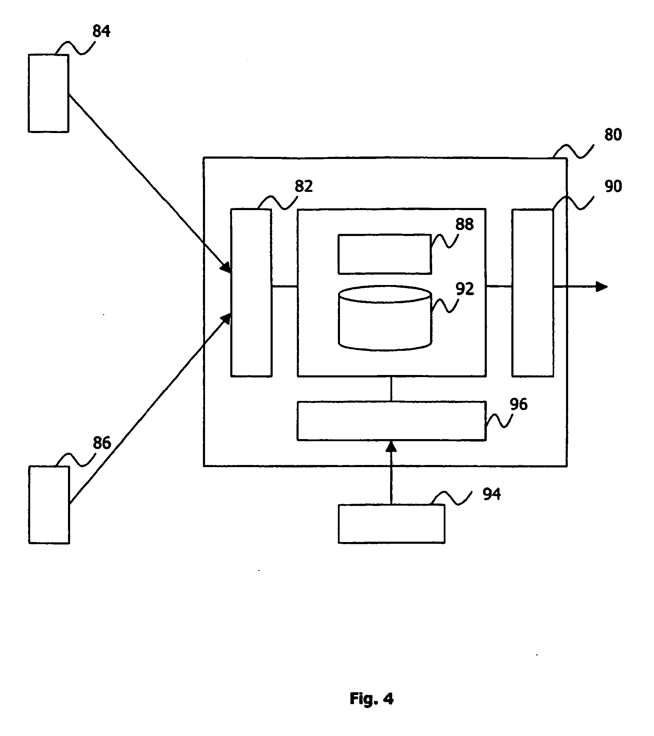

Fig. 4 illustrates an embodiment of a device 80 for processing event messages according to the invention. An event message processable by the device 80 contains information related to an event which occurred to a POS terminal, in particular, to any one external interface or a housing of the terminal. The information includes at least the following: an event code associated with the event, the event code indicating what kind, or type, or nature, the event is; a time stamp indicating the time when the event occurred, hereafter referred to as the event-occurrence-time; and at least one terminal identifier associated with the terminal. The above information uniquely identifies an event. Of course, additional information related to the event and/or the terminal where the event occurred may also be included in the event message.

The device 80 comprises a first interface 82 which is adapted to receive event messages. The event messages may be provided by one or more POS terminals 84 and 86 or come from other sources of event messages. The device also comprises a processor 88 adapted to process the received event messages. The device further comprises a second interface 90 for outputting a notification message generated according to the result of the event-message processing.

In one embodiment, the notification message is output as an audio and/or visual alert to notify a human. In another embodiment, the device 80 may comprise a storage 92 which can store the event messages received by the first interface 82. In yet another embodiment, the device may be a computing device, a computer for example; in one particular embodiment, the device 80 is a server.

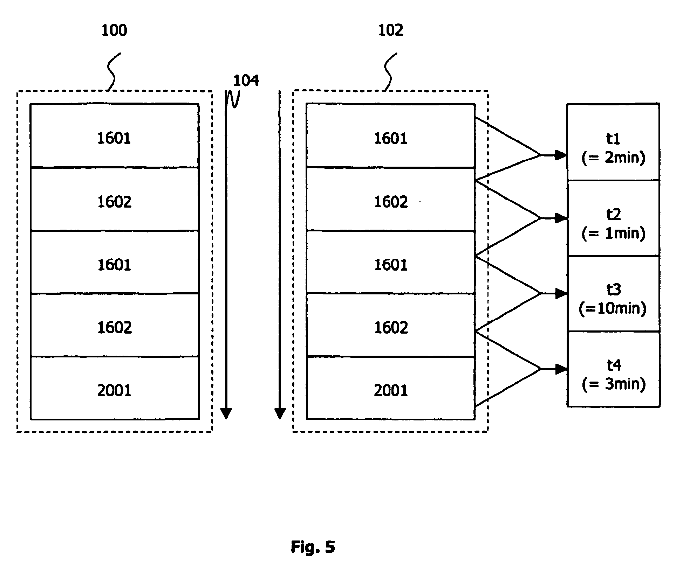

The details of the processing performed by the processor 88 are now to be described with reference to Fig. 2, which shows a set of event messages, and Fig. 5, which shows a so-called "pattern" according to the invention.

The processor 88 receives event messages generated by one or more POS terminals. From the received messages, the processor 88 selects a set of event messages 50, 52, 54, 56 and 58 (see Fig. 2), all of which having a same terminal identifier, SN12345678. The amount of the event messages to be selected can be pre-defined. Alternatively, the selection can be based on a pre-defined time frame; i.e. only the event messages whose event-occurrence-time is within a pre-defined time frame will be selected.

The processor 88 then orders the event codes contained in the set of event messages 50, 52, 54, 56 and 58 into a sequence according to the time stamps in the event messages. That is to say, the event codes are extracted from the event messages and are ordered according to their corresponding event-occurrence-time. The result of the ordering is an ordered sequence 66 as shown in Fig. 2; the arrow in the top-to-bottom direction indicates the order. Specifically, the event code of an event message with an earlier event-occurrence-time is positioned in the sequence prior to the event code of another event message with a later event-occurrence-time. For example, in the sequence 66, the first event code from the top-to-bottom order is associated with the event message 50, which contains a time stamp indicating an event-occurrence-time of 02:35. All the other event codes corresponds to event messages with time stamps indicating event-occurrence-time later than 02:35; thus, the event code of the event message 50 is placed at the first (the top) position in the sequence.

As can be appreciated, the ordered sequence of event codes "tells" a history of events that occurred to the relevant POS terminal. For example, the sequence 66 in Fig. 2 indicates the below series of events happened to POS terminal SN12345678: a "power off" event indicated by event code 1601 - followed by a "power on" event indicated by event code 1602 - followed by another "power off" event indicated by event code 1601- followed by another "power on" event indicated by event code 1602 - and finally, followed by an event indicated by event code 1602, which means a retrieval of information from a card without a subsequent output of payment transactional data over a data interface of the POS terminal SN12345678.

The processor 88 of the device 80 is capable of reading one or more "patterns". The term "pattern" herein stands for a pre-defined data structure comprising a sequence of event codes and possibly accompanied by some additional information. Patterns may be stored in a storage 92 of the device 80 and made available to the processor 88. The storage 92 may be a memory, a database, etc. Patterns may also be provided to the processor 88 from other sources (not shown in Fig. 4). Two exemplary patterns 100 and 102 are shown in Fig. 5. Pattern 100 has the basic structure of a pattern and comprises, in the order as indicated by the arrow 104, a sequence of event codes: 1601, 1602, 1601, 1602, and 2001. Pattern 100 thus indicates the following sequence of events which may occur to some POS terminal: a power-off event - followed by a power-on event - followed by a second power-off event - then followed by a second power-on event - and finally, followed by an event wherein payment related data is retrieved from a payment card but no subsequent transmission of payment transactional data is detected over a data interface for transmitting payment transactional data. Thus, pattern 100 corresponds to the typical manipulation scenario portrayed in the Background of the Invention, above. Various patterns can be pre-defined to correspond to different hardware-manipulation procedures targeted at POS terminals; for instance, a significant increase of power consumption of the terminal, several consecutive power-off events, loss of data connectivity on the data interface combined with power-off events, etc.

After reading the pattern 100 (and perhaps more patterns), the processor 88 compares the ordered sequence 66 of event codes with the pattern 100 to determine whether there is a match between the two, i.e. whether the ordered sequence is the same, or almost the same, as the pattern. When a match is found, the processor 88 generates a notification message indicating the "match found" result, alerting a human administrator to further inspect the matter. The processor 88 can also be configured to generate a score (e.g. 0 - 100%) indicating how good, or how close, the ordered sequence matches the pattern. The scoring alternative helps the pattern matching to be tolerant against small variations in the fraudulent manipulation. Since the notification message may be generated within a short time after a real manipulation has occurred, the fraud can be promptly identified, well before any leakage of card information happens. Such a quick fraud detection can effectively prevent data loss due to manipulation done to POS terminals.

Patterns containing more information than that of pattern 100 can be provided. Pattern 102 in the Fig. 5 is one example. Comparing patterns 100 and 102, it can be seen that while the two patterns both comprise the same sequence of event codes 1601- 1602 - 1601- 1602 - 2001, pattern 102 additionally comprises a sequence of so- called "time-period codes", t1, t2, t3 and t4. As the name suggests, time-period codes indicate time periods. In the particular example of pattern 102, time-period code t1 has a value of 2 minute, time period code t2 has a value of 1 minute, and so on. Each two successive event codes in the pattern are associated with a time-period code. Specifically in the figure, the first event code 1601 and the second event code 1602 are associated with time-period code t1; the second event code 1602 and the third event code 1601 are associated with a time period code t2; the third event code 1601 and the fourth event code 1602 are associated with a time period code t3; and the fourth event code 1602 and the fifth event code 2001 are associated with a time code t4. Methods and ways to establish an association between two successive event codes in a pattern and a time period-code are numerous and are considered to be known in the field of data processing.

In effect, pattern 102 or any of its equivalence represents a series of events with definite time periods between the events. Particularly, pattern 102 indicates a power-off event followed by, in two minutes, a power-on event; which is followed by, in one minute, a second power-off event; which is followed by, in ten minutes, a second power-on event, and which is finally followed by, in three minutes, a retrieval of payment related data from a payment card but with no subsequent output of payment transactional data over a data interface of a POS terminal.

While a pattern such as 102 can represent a more refined indication of hardware manipulation procedures, the processor 88 of the device 80 can be further adapted to produce sequences of event codes accompanied by more information. Accordingly, when ordering the event codes in the selected set of event messages 50, 52, 54, 56, and 58 into a sequence 68 (shown in the lower part of Fig. 2), the processor 88 can additionally associate the ordered event codes with so-called "time-difference codes", d1, d2, d3, and d4, which indicate the temporal difference between the event-occurrence-time of the corresponding events. As can be easily understood, the values of the time-difference codes can be readily obtained from the time stamps in the event messages.

After generating the sequence 68 of event codes associated with time-difference codes d1 - d4, the processor 88 determines whether the sequence 68 matches any event-code sequence in any provided pattern. Assuming there is a match, the processor then determines whether the time-difference codes d1 - d4 associated with the successive event codes in the sequence 68 also match the time-period codes t1 - t4 associated with the corresponding successive event codes in the pattern 102. When this second-level of match is confirmed, the processor 88 generates a second notification message.

The patterns according to the invention are preferably adaptable in many aspects. New patterns may be provided to the processor 88, and existing patterns may be deleted or adjusted. The adjust may be in any of the following manner: Firstly, the pre-defined sequence of event codes in a certain pattern may be adaptable, i.e. existing event codes may be removed from the sequence or replaced with different values; new event codes may be added into the sequence; and the order of the event codes may be rearranged. Secondly, the additional information accompanied to the sequence of event codes may also be adaptable: for example, the values of time-period codes as explained above may be adjustable; a time-period code may take a definite value, e.g. 2 minutes, or some "vague" or "fuzzy" value which indicates a range of time periods, e.g. 2-5 minutes, thus allowing matches to be determined in a more flexible manner. Thirdly, more additional information can be associated with the event codes in the pattern. As can be appreciated, there can be myriad ways of adjusting the patterns.

In addition to the determination using patterns, the processor 88 may also take into consideration of other information before generating the notification message. For instance, the processor 88 may further verify whether an event occurred either at a particular actual time (preferably according to the normal 24-hour timing system) or between a first actual time and a second actual time. For instance, in Fig. 2, event message 50 includes a time stamp 02:35 and an event code 1601, meaning that a power-off event occurred at 02:35. Accordingly, the processor 88 checks whether the event-occurrence-time, i.e. 02:35, occurred between 22:00, which is a typical closing time of a shop, and 09:00, which is a typical shop opening time. To compare an event-occurrence-time with one or more actual times may increase the accuracy of hardware manipulation detection. For example, a sudden power-off event at 17:00, which is usually the high-business time for a shop, is not likely to indicate a malevolent tampering of the power interface by a fraudster, but rather, a malfunction performed by the user of the POS terminal (e.g. an accidental un-plug of the power cable). On the contrary, a power-off at 02:35 is quite possible the result of a fraudulent manipulation. In short, evaluating other information before generating the notification message may increase the accuracy of fraud detection.

In some cases, when inspecting event messages regarding a POS terminal to determine whether a possible hardware manipulation has happened to this particular terminal, information from other POS terminals may be helpful. For example, a power-off event immediately followed by a power-on event happening at a night time could be interpreted as a hardware manipulation on the power interface of the terminal in question, but this incident could also be the simple result of a general power failure in the area where the POS terminal is located. In such a case, it may be wise to double-check whether other POS terminals in that area experienced the same power interruption at the same time. If all the POS terminals in the area report the same power-off - power-on sequence at the same time, it could safely be concluded as a general power failure in the area instead of a hardware manipulation done to a certain POS terminal.

In order to take advantage of the information of and/or from other POS terminals, certain information of these other POS terminals needs to be made available to the processor 88. For example, when it is necessary to check all the terminals in a geographical area, identifiers of these terminals and the location information of these terminals should be provided to the processor 88. The location information may include, e.g. physical addresses and/or postal codes of the physical location of the terminals. User information of the terminals may also be useful. For each terminal, the user information includes an identifier of the user, a first actual time such as the usual closing time of the user's shop, and/or a second actual time, which is usually the opening time of the shop.

The above information related to POS terminals can be made available to the processor 88 in different ways. The information may be stored in the storage 92 of the device 80 wherein the content of the storage is accessible by the processor 88; or the information may be supplied by an external source 94 and provided to the processor 88 through a third interface 96 of the device 80. A good candidate for this external source 94 is a POS-terminal administration system, which may be managed by a payment service provider serving a plurality of POS terminals.

A specific example of how to make use of information from a second POS terminal, while event messages with respect to a first POS terminal are being processed, is now explained. After finding a match with a particular pattern for the first terminal, (the processor 88) processes a second set of event messages generated by the second POS terminal to see if a match with the same pattern can also be found for the second terminal. Specifically, the processor 88 selects a second set of event messages having a second terminal identifier; orders the event codes in the second set of event messages into a second sequence according to the time stamps in the second set of event messages; compares the second sequence of event codes with this particular pattern to determine if there is a match as well; if the second sequence of event codes is also determined to match the pattern, a second notification message is generated. Of course, the processor 88 may be further adapted to examine event messages from a third terminal, a fourth one, and so on.

Even further, supplementary techniques such as artificial intelligence, fuzzy algorithm, and the like, may be employed by the device 80 to increase the accuracy of fraud detection. As an example, which has been mentioned above, in addition to simply producing a match result of a binary type, i.e. indicating either "match found" or "match not found", the processor 88 can be configured to generate a score (e.g. 0 - 100%) indicating how good, or how close, the ordered sequence matches the pattern. The scoring alternative helps the pattern matching to be tolerant against small variations in the fraudulent manipulation.

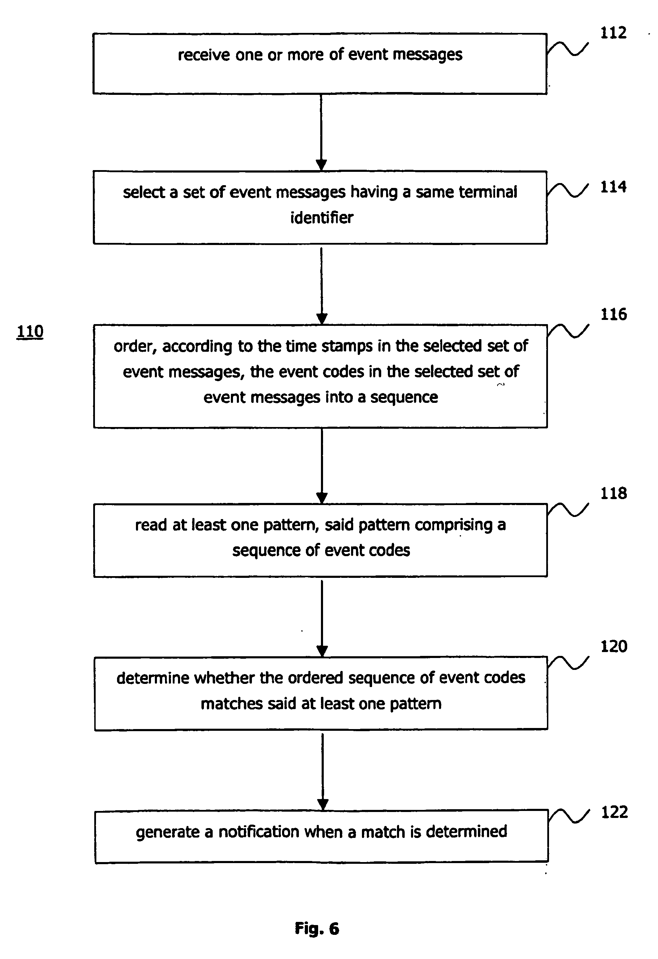

Referring to Fig. 6, an embodiment of a second method 110 for a device for processing event messages according to the invention will be explained. In order to provide a more thorough understanding, the method 110 will be exemplary described in relation to the device 80 of Fig. 4, the event messages shown in Fig. 2, and the patterns shown in Fig. 5. However, it should noted that the method 110 can also be practiced in combination with a device having a different configuration from that of Fig. 1, with event messages having a different structure from that shown in Fig. 2, and with patterns having a different structure from that shown in Fig. 5.

The method 110 is for processing event messages, each of which contains an event code associated with an event occurred to a housing or an external interface of a POS terminal, a time stamp indicating the time when the event occurs, and at least one terminal identifier. The method 110 starts with receiving, or collecting, one or more of such event messages, as shown at step 112. Then, at step 114, from the received event messages, a set of event messages having the same terminal identifier are selected. Next, at step 116, according to the time stamps in the selected set of event messages, the event codes in the selected set of event messages are ordered into a sequence. At least one pattern, which comprises a sequence of event codes, is provided or read; this is shown as step 118. Thereafter, at step 120, the ordered sequence of event codes is compared with the at least one pattern to determine whether the former matches the latter. Finally, when there is a match, a notification message is generated.

Although embodiments of the invention have been illustrated in the accompanying drawings and described in the foregoing description, it should be understood that the invention is not limited to the embodiments disclosed therein. In particular, the invention is capable of numerals rearrangements, modifications, and substitutions.

## Claims

1. A Point-of-Sale (POS) terminal (10) for performing electronic payment transactions, said terminal (10) associated with at least one terminal identifier (60) and comprising a housing (24) and multiple external interfaces (26, 28, 30, 34), said terminal (10) further comprising:
- at least one detector (36, 38, 40, 42, 44) adapted to detect an event occurred to the housing (24) or at least one external interface (26, 28, 30) of the terminal (10);
- a processor (32) adapted to, based on the detected event, generate an event message comprising an event code (64) associated with the event; and
- a message interface (34) adapted to output the event message, wherein the message interface (34) is one of said external interfaces (26, 28, 30, 34);
**characterized in that** the event message further comprises:
a time stamp (62) indicating the time when the event occurred, and at least one terminal identifier (60) of the terminal (10).

2. The terminal (10) of claim 1, wherein said event is any one of the following:
- a removal of any one of said external interfaces (26, 26, 30, 34) or any part of the housing (24) from the terminal (10); and
- an attachment or a re-attachment of any one of said external interfaces (26, 28, 30, 34) or any part of the housing (24) to the terminal (10).

3. The terminal (10) of any of the preceding claims, wherein said external interfaces (26, 26, 30, 34) include a power interface (26) over which power is supplied to the terminal (10), and said event is any one of the following further events:
- a change of power supply from on to off;
- a change of power supply from off to on.

4. The terminal (10) of any of the preceding claims, wherein said external interfaces (26, 28, 30, 34) further include a data interface (28) over which the terminal (10) outputs payment transactional data, and said event is any one of the following further events:
- a discontinuation of data transmission over the data interface (28);
- a start or restart of data transmission over the data interface (28).

5. The terminal (10) of any of the preceding claims, wherein said terminal (10) further comprises a card reading interface (30) adapted to retrieve payment related data from a payment card, and said event is any one of the following further events:
- a retrieval of payment related data from the card without a subsequent output of payment transactional data via a data interface over which the terminal (10) outputs payment transactional data.

6. The terminal (10) of any of the preceding claims, wherein said event is any one of the following further events:
- an opening of any part of the housing (24) of the terminal (10);
- a closing of any part of the housing (24) of the terminal (10);
- an increase in power consumption of the terminal (10) by a first pre-defined level; and
- a decrease in power consumption of the terminal (10) by a second pre-defined level.

7. The terminal (10) of any of the preceding claims, wherein said terminal (10) further comprises a memory (46) for storing a plurality of event messages and said message interface (34) is further adapted to output a plurality of event messages.

8. The terminal (10) of any of the preceding claims, wherein said terminal identifier (60) is any one or any combination of the following:
- an identifier which is associated with a user of the terminal (10);
- an physical identifier of the terminal (10).

9. The terminal (10) of any of the preceding claims, wherein said physical identifier is a serial number or serial code.

10. The terminal (10) of any of the preceding claims, wherein said terminal (10) further comprises a card reading interface (30) adapted to retrieve payment related data from a payment card and said processor (32) is further adapted to initiate an electronic payment transaction based on the payment related data retrieved from the card.

11. A method (70) for detecting hardware manipulation of a Point-of-Sale (POS) terminal (10), said terminal (10) comprising a housing (34) and multiple external Interfaces (26, 28, 30, 34), said terminal (10) being associated with at least one terminal identifier (60), said method comprising the steps of:
- detecting (72) an event occurred to the housing (24) or at least one external interface (26, 28, 30, 34) of the terminal (10);
- generating (74), based on the detected event, an event message comprising an event code (64) associated with the event,; and
- outputting (76) the event message via one (34) of said external interfaces (26, 28, 30, 34) of the terminal;
**characterized in that** the event message is generated to further comprise a time stamp (62) indicating the time when the event occurred, and at least one terminal identifier (60).

12. The method (70) of claim 11, wherein said method (70) further comprising the step of:
- storing the event message before outputting it.

13. The method (70) of claim 12, wherein said method step of outputting (76) is:
- outputting a plurality of stored event messages.

14. A computer program product comprising program code portions for performing the steps of the method according to of any one of the claims 11 to 13 when the computer program product is executed on one or more computing devices.

15. A device (80) for processing event messages (50, 52, 54, 56, 58), said event message (50, 52, 54, 56, 58) comprising an event code (64) associated with an event occurred to an external interface (26, 28, 30, 34) or a housing (24) of a Point-of-Sale (POS) terminal (10), a time stamp (62) indicating the time when the event occurred, here after referred to as the event-occurrence-time, and at least one terminal identifier (60), said device (80) comprising:
- a first interface (82) adapted to receive one or more of said event messages (50, 52, 54, 56, 58);
- a processor adapted to:
- select a first set of event messages (50, 52, 54, 56, 58) having a first terminal identifier (60);
- order, according to the time stamps (62) in the first set of event messages (50, 52, 54, 56, 58), the event codes (64) in the first set of event messages (50, 52, 54, 56, 58) into a first sequence (68);
- read at least one pattern (100, 102), said pattern (100, 102) comprising a sequence (104) of event codes;
- determine whether the first sequence (68) of event codes matches said at least one pattern (100, 102); and
- generate a notification message, when a match is determined; and
- a second interface (90) adapted to output the notification message.

16. The device (80) of claim 15, wherein said pattern (102) further comprises a plurality of time-period codes (t1, t2, t3, t4) indicating time periods; wherein each two successive event codes in the pattern (102) are associated with one of the time-period codes (t1, t2, t3, t4).

17. The device (80) of claim 16, wherein the processor (88) is further adapted to associate each two successive event codes (64) in the first sequence (68) with a time-difference code (d1, d2, d3, d4), the time-difference code (d1, d2, d3, d4) indicating a time difference between the event-occurrence-time of the two corresponding events (64).

18. The device (80) of claim 17, wherein the processor (88) is further adapted to, when the first sequence (68) of event codes (64) is determined to match at least one of said patterns (100, 102), determine whether the time-difference code (d1, d2, d3, d4) associated with each two successive event codes (64) in the first sequence (68) matches the time-period code (t1, t2, t3, t4) associated with the corresponding two successive event codes (64) in said at least one pattern (100, 102).

19. The device (80) of any of claims 15 to 18, wherein the processor (88) is further adapted to determine whether at least one of the time stamps (64) in the selected set of event messages (50, 52, 54, 56, 58) indicates an event-occurrence time between a first actual time and a second actual time.

20. The device (80) of any of claims 15 to 19, further comprising a third interface (96) for receiving additional information related to a plurality of POS terminals (84, 86), said additional information including at least one of the following:
- location information of at least one of the plurality of terminals (10, 84, 86), said location information including a physical address and/or a postal code of the terminal (10, 84, 86);
- a serial number or a serial code of the terminal (10, 84, 86);
- a terminal identifier (60) associated with a user of the terminal (10, 84, 86); and
- user information of the terminal (10, 84, 86), said user information including an identifier of a user of the terminal (10, 84, 86), a first actual time and/or a second actual time associated with the user.

21. The device (80) of any of claims 15 to 20, wherein the processor (88) is further adapted to
- select a second set of event messages having a second terminal identifier;
- order, according to the time stamps in the second set of event messages, the event codes in the second set of event messages into a second sequence;
- when the first sequence of event codes is determined to match said at least one pattern, determine whether the second sequence of event codes matches said pattern as well; and
- generate a second notification message, when the second sequence of event codes is determined to match said pattern as well.

22. The device (80) of any of claims 15 to 21, further comprising a storage means (92) for storing at least one of the following:
- said one or more event messages received by the first interface (82);
- said one or more patterns (100, 102).

23. The device (80) of any of claims 20 to 22, further comprising a storage means (92) for storing at least said additional information received by the third interface (96).

24. A method (110) for processing event messages, said event message comprising an event code (64) associated with an event occurred to an external interface (26, 28, 30, 34) or a housing (24) of a Point-of-Sale (POS) terminal (10), a time stamp (62) indicating the time when the event occurred, and at least one terminal identifier (60), said method (110) comprising the steps of:
- receiving (112) one or more of said event messages;
- selecting (114) a set of event messages having a same terminal identifier (60);
- ordering (116), according to the time stamps (62) in the selected set of event messages, the event codes (66) in the selected set of event messages into a sequence (68);
- reading (118) at least one pattern (100, 102), said pattern (100, 102) comprising a sequence (104) of event codes;
- determining (120) whether the ordered sequence (68) of event codes matches said at least one pattern (100, 102); and
- generating (122) a notification message, when a match is determined.

25. A computer program product comprising program code portions for performing the steps of the method (110) according to claim 24 when the computer program product is executed on one or more computing devices.

## Patentansprüche

1. Kassenterminal (10) zur Durchführung elektronischer Zahlungstransaktionen, wobei dem Terminal (10) mindestens eine Terminalkennung (60) zugeordnet ist und das Terminal (10) ein Gehäuse (24) und mehrere externe Schnittstellen (26, 28, 30, 34) aufweist, wobei das Terminal (10) ferner umfasst:
- mindestens einen Detektor (36, 38, 40, 42, 44), der dazu eingerichtet ist, ein am Gehäuse (24) oder mindestens einer externen Schnittstelle (26, 28, 30) des Terminals (10) stattfindendes Ereignis zu detektieren,
- einen Prozessor (32), der dazu eingerichtet ist, auf Basis des detektierten Ereignisses eine Ereignismeldung mit einem dem Ereignis zugeordneten Ereigniscode (64) zu erzeugen, und
- eine Meldeschnittstelle (34), die zur Ausgabe der Ereignismeldung eingerichtet ist, wobei die Meldeschnittstelle (34) eine der externen Schnittstellen (26, 28, 30, 34) ist, **dadurch gekennzeichnet, dass** die Ereignismeldung ferner umfasst:
einen Zeitstempel (62), der die Uhrzeit angibt, zu der das Ereignis stattfand, und mindestens eine Terminalkennung (60) des Terminals (10).

2. Terminal (10) nach Anspruch 1, wobei das Ereignis eines der folgenden ist:
- ein Entfernen einer der externen Schnittstellen (26, 28, 30, 34) oder eines Teils des Gehäuses (24) vom Terminal (10), und
- das Anbringen oder erneute Anbringen einer der externen Schnittstellen (26, 28, 30, 34) oder eines Teils des Gehäuses (24) am Terminal (10).

3. Terminal (10) nach einem der vorigen Ansprüche, wobei die externen Schnittstellen (26, 28, 30, 34) eine Energieversorgungsschnittstelle (26) umfassen, über die das Terminal (10) mit elektrischer Energie versorgt wird, und wobei das Ereignis eines der nachstehenden weiteren Ereignisse ist:
- ein Wechsel der Energieversorgung von eingeschaltet auf ausgeschaltet,
- ein Wechsel der Energieversorgung von ausgeschaltet auf eingeschaltet.

4. Terminal (10) nach einem der vorigen Ansprüche, wobei die externen Schnittstellen (26, 28, 30, 34) ferner eine Datenschnittstelle (28) umfassen, über die das Terminal (10) Zahlungstransaktionsdaten ausgibt, und wobei das Ereignis eines der nachstehenden weiteren Ereignisse ist:
- eine Beendigung einer Datenübertragung über die Datenschnittstelle (28),
- ein Start oder Neustart einer Datenübertragung über die Datenschnittstelle (28).

5. Terminal (10) nach einem der vorigen Ansprüche, wobei das Terminal (10) ferner eine Kartenleseschnittstelle (30) umfasst, die dazu eingerichtet ist, zahlungsbezogene Daten von einer Zahlungskarte zu lesen, und wobei das Ereignis eines der nachstehenden weiteren Ereignisse ist:
- ein Lesen zahlungsbezogener Daten von der Karte ohne eine anschließende Ausgabe von Zahlungstransaktionsdaten über eine Datenschnittstelle, über die das Terminal (10) Zahlungstransaktionsdaten ausgibt.

6. Terminal (10) nach einem der vorigen Ansprüche, wobei das Ereignis eines der nachstehenden weiteren Ereignisse ist:
- ein Öffnen eines Teils des Gehäuses (24) des Terminals (10),
- ein Schließen eines Teils des Gehäuses (24) des Terminals (10),
- ein Anstieg des Energieverbrauchs des Terminals (10) um einen ersten vordefinierten Betrag, und
- eine Abnahme des Energieverbrauchs des Terminals (10) um einen zweiten vordefinierten Betrag.

7. Terminal (10) nach einem der vorigen Ansprüche, wobei das Terminal (10) ferner einen Speicher (46) zum Speichern einer Mehrzahl Ereignismeldungen aufweist und wobei die Meldeschnittstelle (34) ferner dazu eingerichtet ist, eine Mehrzahl Ereignismeldungen auszugeben.

8. Terminal (10) nach einem der vorigen Ansprüche, wobei die Terminalkennung (60) eine der nachstehenden Kennungen oder eine Kombination derselben ist:
- eine Kennung, die dem Benutzer des Terminals (10) zugeordnet ist,
- ein physische Kennung des Terminals (10).

9. Terminal (10) nach einem der vorigen Ansprüche, wobei die physische Kennung eine Seriennummer oder ein Seriencode ist.

10. Terminal (10) nach einem der vorigen Ansprüche, wobei das Terminal (10) ferner eine Kartenleseschnittstelle (30) aufweist, die dazu eingerichtet ist, zahlungsbezogene Daten von einer Zahlungskarte zu lesen, und wobei der Prozessor (32) ferner dazu eingerichtet ist, eine elektronische Zahlungstransaktion auf Basis der von der Karte gelesenen zahlungsbezogenen Daten zu veranlassen.

11. Verfahren (70) zur Detektion von Hardware-Manipulationen an einem Kassenterminal (10), wobei das Terminal (10) ein Gehäuse und mehrere externe Schnittstellen (26, 28, 30, 34) aufweist und dem Terminal (10) mindestens eine Terminalkennung (60) zugeordnet ist, wobei das Verfahren die Schritte umfasst:
- Detektieren (72) eines am Gehäuse (24) oder an mindestens einer der externen Schnittstellen (26, 28, 30, 34) des Terminals (10) stattfindenden Ereignisses,
- Erzeugen (74) einer Ereignismeldung auf Basis des detektierten Ereignisses, wobei eine Ereignismeldung einen dem Ereignis zugeordneten Ereigniscode (64) enthält, und
- Ausgeben (76) der Ereignismeldung über eine der externen Schnittstellen (34) des Terminals (10),
**dadurch gekennzeichnet, dass** die Ereignismeldung so erzeugt wird, dass sie ferner einen Zeitstempel (62), der die Uhrzeit angibt, zu der das Ereignis stattfand, und mindestens eine Terminalkennung (60) umfasst.

12. Verfahren (70) nach Anspruch 11, wobei das Verfahren (70) ferner den Schritt umfasst:
- Speichern der Ereignismeldung vor ihrer Ausgabe.

13. Verfahren (70) nach Anspruch 12, wobei der Verfahrensschritt des Ausgebens (76) ein Ausgeben einer Mehrzahl gespeicherter Ereignismeldungen ist.

14. Computerprogrammprodukt mit Programmcodeteilen zur Ausführung der Schritte des Verfahrens nach einem der Ansprüche 11 bis 13, wenn das Computerprogrammprodukt auf einem oder mehreren Rechengeräten ausgeführt wird.

15. Vorrichtung (80) zur Verarbeitung von Ereignismeldungen (50, 52, 54, 56, 58), wobei die Ereignismeldung (50, 52, 54, 56, 58) einen Ereigniscode (64), der einem an einer externen Schnittstelle (26, 28, 30, 34) oder einem Gehäuse (24) eines Kassenterminals (10) stattgefundenen Ereignis zugeordnet ist, einen Zeitstempel (62), der die Uhrzeit angibt, zu der das Ereignis stattfand, nachfolgend als Ereignisauftretenszeit bezeichnet, und mindestens eine Terminalkennung (60) enthält, wobei die Vorrichtung (80) umfasst:
- eine erste Schnittstelle (82), die zum Empfang einer oder mehrerer dieser Ereignismeldungen (50, 52, 54, 56, 58) eingerichtet ist,
- einen Prozessor, der dazu eingerichtet ist:
- einen ersten Satz Ereignismeldungen (50, 52, 54, 56, 58) mit einer ersten Terminalkennung (60) auszuwählen,
- die Ereigniscodes (64) des ersten Satzes Ereignismeldungen (50, 52, 54, 56, 58) nach Maßgabe der Zeitstempel (62) in dem ersten Satz Ereignismeldungen (50, 52, 54, 56, 58) zu einer ersten Folge (68) zu ordnen,
- mindestens ein Muster (100, 102) zu lesen, wobei das Muster (100, 102) eine Folge (104) von Ereigniscodes aufweist,
- zu ermitteln, ob die erste Folge von Ereigniscodes (68) mit dem mindestens einen Muster (100, 102) übereinstimmt, und
- eine Benachrichtigungsmeldung zu erzeugen, wenn eine Übereinstimmung gefunden wird, und
- eine zweite Schnittstelle (90), die zum Ausgeben der Benachrichtigungsmeldung eingerichtet ist.

16. Vorrichtung (80) nach Anspruch 15, wobei das Muster (102) ferner eine Mehrzahl Zeitdauercodes (t1, t2, t3, t4) enthält, die Zeitdauern angeben, wobei jeweils zwei aufeinanderfolgende Ereigniscodes in dem Muster (102) einem der Zeitdauercodes (t1, t2, t3, t4) zugeordnet sind.

17. Vorrichtung (80) nach Anspruch 16, wobei der Prozessor (88) ferner dazu eingerichtet ist, jeweils zwei aufeinanderfolgenden Ereigniscodes (64) in der ersten Folge (68) einen Zeitdifferenzcode (d1, d2, d3, d4) zuzuordnen, wobei der Zeitdifferenzcode (d1, d2, d3, d4) die Zeitdifferenz zwischen den Ereignisauftretenszeiten der jeweiligen beiden Ereignisse (64) angibt.

18. Vorrichtung (80) nach Anspruch 17, wobei der Prozessor (88) ferner dazu eingerichtet ist, bei Feststellung einer Übereinstimmung der ersten Folge (68) von Ereigniscodes (64) mit mindestens einem der Muster (100, 102) zu ermitteln, ob der jeweils zwei aufeinanderfolgenden Ereigniscodes (64) entsprechende Zeitdifferenzcode (d1, d2, d3, d4) in der ersten Folge (68) mit dem Zeitdauercode (t1, t2, t3, t4) übereinstimmt, der den entsprechenden zwei aufeinanderfolgenden Ereigniscodes (64) in dem mindestens einen Muster (100, 102) zugeordnet ist.

19. Vorrichtung (80) nach einem der Ansprüche 15 bis 18, bei dem der Prozessor (88) ferner dazu eingerichtet ist, zu ermitteln, ob mindestens einer der Zeitstempel (64) in dem gewählten Satz von Ereignismeldungen (50, 52, 54, 56, 58) eine Ereignisauftretenszeit zwischen einer ersten Ist-Uhrzeit und einer zweiten Ist-Uhrzeit angibt.

20. Vorrichtung (80) nach einem der Ansprüche 15 bis 19, ferner umfassend eine dritte Schnittsstelle (96), um zusätzliche Informationen betreffend eine Mehrzahl von Kassenterminals (84, 86) zu empfangen, wobei die zusätzlichen Informationen mindestens eine der folgenden Informationen enthalten:
- Standortinformationen von mindestens einem der Mehrzahl der Terminals (10, 84, 86), wobei die Standortinformationen eine physische Adresse und/oder eine Postleitzahl des Terminals (10, 84, 86) enthalten,
- eine Seriennummer oder einen Seriencode des Terminals (10, 84, 86),
- eine einem Benutzer des Terminals (10, 84, 86) zugeordnete Terminalkennung (60) und
- Benutzerinformationen des Terminals (10, 84, 86), wobei die Benutzerinformationen eine Kennung eines Benutzers des Terminals (10, 84, 86), eine erste Ist-Uhrzeit und/oder eine zweite Ist-Uhrzeit, die dem Benutzer zugeordnet sind, enthalten.

21. Vorrichtung (80) nach einem der Ansprüche 15 bis 20, wobei der Prozessor (88) ferner dazu eingerichtet ist,
- einen zweiten Satz von Ereignismeldungen mit einer zweiten Terminalkennung auszuwählen,
- die Ereigniscodes im zweiten Satz von Ereignismeldungen nach Maßgabe der Zeitstempel in dem zweiten Satz von Ereignismeldungen zu einer zweiten Folge zu ordnen,
- im Fall der Feststellung einer Übereinstimmung der ersten Folge von Ereigniscodes mit dem Muster zu ermitteln, ob die zweite Folge von Ereigniscodes ebenfalls mit dem Muster übereinstimmt, und
- eine zweite Benachrichtigungsmeldung zu erzeugen, wenn festgestellt wird, dass die zweite Folge von Ereigniscodes ebenfalls mit dem Muster übereinstimmt.

22. Vorrichtung (80) nach einem der Ansprüche 15 bis 21, ferner umfassend ein Speichermittel (92), um zumindest eines der folgenden zu speichern:
die eine oder die mehreren Ereignismeldungen, die von der ersten Schnittstelle (82) empfangen werden,
das eine oder die mehreren Muster (100, 102).

23. Vorrichtung (80) nach einem der Ansprüche 20 bis 22, ferner umfassend ein Speichermittel (92) zum Speichern zumindest der zusätzlichen von der dritten Schnittstelle (96) empfangenen Informationen.

24. Verfahren (110) zur Verarbeitung von Ereignismeldungen, wobei die Ereignismeldung einen Ereigniscode (64), der einem an einer externen Schnittstelle (26, 28, 30, 34) oder einem Gehäuse (24) eines Kassenterminals (10) stattgefundenen Ereignis zugeordnet ist, einen Zeitstempel (62), der die Uhrzeit angibt, zu der das Ereignis stattfand, und mindestens eine Terminalkennung (60) enthält, wobei das Verfahren (110) die Schritte umfasst:
- Empfangen (112) einer oder mehrerer Ereignismeldungen,
- Wählen (114) eines Satzes von Ereignismeldungen mit derselben Terminalkennung (60),
- Ordnen (116) der Ereigniscodes (66) in dem gewählten Satz von Ereignismeldungen zu einer Folge (68) nach Maßgabe der Zeitstempel (62) in dem gewählten Satz von Ereignismeldungen,
- Lesen (118) mindestens eines Musters (100, 102), wobei das Muster (100, 102) eine Folge (104) von Ereigniscodes aufweist,
- Ermitteln (120), ob die geordnete Folge (68) der Ereigniscodes mit dem mindestens einen Muster (100, 102) übereinstimmt, und
- Erzeugen einer Benachrichtigungsmeldung, falls eine Übereinstimmung gefunden wird.

25. Computerprogrammprodukt mit Programmcodeteilen zur Ausführung der Schritte des Verfahrens (110) nach Anspruch 24, wenn das Computerprogrammprodukt auf einem oder mehreren Rechengeräten ausgeführt wird.

## Revendications

1. Point de vente (POS) pour un terminal (10) destiné à réaliser des transactions de paiement électronique, ledit terminal (10) étant associé à au moins un identificateur de terminal (60) et comprenant un logement (24) et de multiples interfaces externes (26, 28, 30, 34), ledit terminal (10) comprenant en outre :
- au moins un détecteur (36, 38, 40, 42, 44) adapté pour détecter un événement s'étant produit sur le logement (24) ou au moins une interface externe (26, 28, 30) du terminal (10) ;
- un processeur (32) adapté pour générer, sur la base de l'événement détecté, un message d'événement comprenant un code d'événement (64) associé à l'événement ; et
- une interface de message (34) adaptée pour délivrer en sortie le message d'événement, dans laquelle l'interface de message (34) est l'une desdites interfaces externes (26, 28, 30, 34) ;
**caractérisé en ce que** le message d'événement comprend en outre :
une estampille temporelle (62) indiquant l'instant auquel l'événement s'est produit, et au moins un identificateur de terminal (60) du terminal (10).

2. Terminal (10) selon la revendication 1, dans lequel ledit événement est l'un quelconque parmi ce qui suit :
- la suppression de l'une quelconque desdites interfaces externes (26, 28, 30, 34) ou d'une partie quelconque du logement (24) du terminal (10) ; et
- l'indexation ou la ré-indexation de l'une quelconque desdites interfaces externes (26, 28, 30, 34) ou d'une partie quelconque du logement (24) du terminal (10).

3. Terminal (10) selon l'une quelconque des revendications précédentes, dans lequel lesdites interfaces externes (26, 28, 30, 34) comprennent une interface d'alimentation (26) à travers laquelle l'alimentation est délivrée vers le terminal (10), et ledit événement est l'un quelconque parmi les événements supplémentaires qui suivent :
- un changement d'alimentation de marche à arrêt ;
- un changement d'alimentation d'arrêt à marche.

4. Terminal (10) selon l'une quelconque des revendications précédentes, dans lequel lesdites interfaces externes (26, 28, 30, 34) comprennent en outre une interface de données (28) à travers laquelle le terminal (10) délivre en sortie des données de transactions de paiement, et ledit événement est l'un quelconque parmi les événements supplémentaires qui suivent :
- une interruption de la transmission des données à travers l'interface de données (28) ;
- un lancement ou un relancement de la transmission des données à travers l'interface de données (28).

5. Terminal (10) selon l'une quelconque des revendications précédentes, dans lequel ledit terminal (10) comprend en outre une interface de lecture de carte (30) adaptée pour récupérer des données se rapportant au paiement à partir d'une carte de paiement, et ledit événement est l'un quelconque parmi les événements supplémentaires qui suivent :
- la récupération des données se rapportant au paiement à partir de la carte sans que par la suite les données de transaction de paiement soient délivrées en sortie via une interface de données à travers laquelle le terminal (10) délivre en sortie les données de transaction de paiement.

6. Terminal (10) selon l'une quelconque des revendications précédentes, dans lequel ledit événement est l'un quelconque parmi les événements supplémentaires qui suivent :
- l'ouverture d'une partie quelconque du logement (24) du terminal (10) ;
- la fermeture d'une partie quelconque du logement (24) du terminal (10) ;
- l'augmentation de la consommation d'énergie du terminal (10) d'un premier niveau prédéterminé ; et
- la diminution de la consommation d'énergie du terminal (10) d'un deuxième niveau prédéfini.

7. Terminal (10) selon l'une quelconque des revendications précédentes, dans lequel ledit terminal (10) comprend en outre une mémoire (46) destinée à mémoriser une pluralité de messages d'événement et ladite interface de message (34) est en outre adaptée pour délivrer en sortie une pluralité de messages d'événement.

8. Terminal (10) selon l'une quelconque des revendications précédentes, dans lequel ledit identificateur de terminal (60) est l'un quelconque ou une combinaison quelconque de ce qui suit :
- un identificateur qui est associé à un utilisateur du terminal (10) ;
- un identificateur physique du terminal (10).

9. Terminal (10) selon l'une quelconque des revendications précédentes, dans lequel ledit identificateur physique est un numéro de série ou un code de série.

10. Terminal (10) selon l'une quelconque des revendications précédentes, dans lequel ledit terminal (10) comprend en outre une interface de lecture de carte (30) adaptée pour récupérer des données se rapportant au paiement à partir d'une carte de paiement et ledit processeur (32) est en outre adapté pour lancer une transaction de paiement électronique sur la base des données se rapportant au paiement récupérées à partir de la carte.

11. Procédé (70) pour la détection d'une manipulation matérielle d'un terminal (10) d'un point de vente (POS), ledit terminal (10) comprenant un logement (24) et de multiples interfaces externes (26, 28, 30, 34), ledit terminal (10) étant associé à au moins un identificateur de terminal (60), ledit procédé comprenant les étapes consistant à :
- détecter (72) un événement s'étant produit sur le logement (24) ou au moins une interface externe (26, 28, 30, 34) du terminal (10) ;
- générer (74), sur la base de l'événement détecté, un message d'événement comprenant un code d'événement (64) associé à l'événement ; et
- délivrer en sortie (76) le message d'événement via l'une (34) desdites interfaces externes (26, 28, 30, 34) du terminal ;
**caractérisé en ce que** le message d'événement est généré pour comprendre en outre une estampille temporelle (62) indiquant l'instant auquel l'événement s'est produit, et au moins un identificateur de terminal (60).

12. Procédé (70) selon la revendication 11, dans lequel ledit procédé (70) comprend en outre l'étape consistant à :
- mémoriser le message d'événement avant de le délivrer en sortie.

13. Procédé (70) selon la revendication 12, dans lequel ladite étape de sortie (76) du procédé consiste à :
- délivrer en sortie une pluralité de messages d'événement mémorisés.

14. Produit-programme informatique comprenant des parties de code de programme destinées à exécuter les étapes du procédé conformément à l'une quelconque des revendications 11 à 13 lorsque le produit-programme informatique est exécuté sur un ou plusieurs dispositifs informatiques.

15. Dispositif (80) destiné à traiter des messages d'événement (50, 52, 54, 56, 58), lesdits messages d'événement (50, 52, 54, 56, 58) comprenant un code d'événement (64) associé à un événement s'étant produit sur une interface externe (26, 28, 30, 34) ou un logement (24) d'un terminal (10) d'un point de vente (POS), une estampille temporelle (62) indiquant l'instant auquel l'événement s'est produit, que l'on appellera par la suite instant d'apparition d'événement, et au moins un identificateur de terminal (60), ledit dispositif (80) comprenant :
- une première interface (82) adaptée pour recevoir un ou plusieurs desdits messages d'événement (50, 52, 54, 56, 58) ;
- un processeur adapté pour :
- sélectionner un premier ensemble de messages d'événement (50, 52, 54, 56, 58) comportant un premier identificateur de terminal (60) ;
- ordonner, conformément aux estampilles temporelles (62) dans le premier ensemble de messages d'événement (50, 52, 54, 56, 58), les codes d'événement (64) dans le premier ensemble des messages d'événement (50, 52, 54, 56, 58) en une première séquence (68) ;
- lire au moins un motif (100, 102), ledit motif (100, 102) comprenant une séquence (104) de codes d'événement ;
- déterminer si la première séquence (68) des codes d'événement correspond audit au moins un motif (100, 102) ; et
- générer un message de notification, lorsqu'une correspondance est déterminée ; et
- une deuxième interface (90) adaptée pour délivrer en sortie le message de notification.

16. Dispositif (80) selon la revendication 15, dans lequel ledit motif (102) comprend en outre une pluralité de codes de période de temps (t1, t2, t3, t4) indiquant des périodes de temps ; dans lequel chaque deux codes d'événement successifs dans le motif (102) sont associés à l'un des codes de période de temps (t1, t2, t3, t4).

17. Dispositif (80) selon la revendication 16, dans lequel le processeur (88) est en outre adapté pour associer chaque deux codes d'événement successifs (64) dans la première séquence (68) à un code de différence de temps (d1, d2, d3, d4), le code de différence de temps (d1, d2, d3, d4) indiquant une différence de temps entre l'instant d'apparition d'événement des deux événements correspondants (64).

18. Dispositif (80) selon la revendication 17, dans lequel le processeur (88) est en outre adapté pour, lorsque la première séquence (68) des codes d'événement (64) est déterminée correspondre à au moins l'un desdits motifs (100, 102), déterminer si le code de différence de temps (d1, d2, d3, d4) associé à chaque deux codes d'événement successifs (64) dans la première séquence (68) correspond au code de période de temps (t1, t2, t3, t4) associé aux deux codes d'événement successifs correspondants (64) dans ledit au moins un motif (100, 102).

19. Dispositif (80) selon l'une quelconque des revendications 15 à 18, dans lequel le processeur (88) est en outre adapté pour déterminer si au moins l'une des estampilles temporelles (64) dans l'ensemble sélectionné de messages d'événement (50, 52, 54, 56, 58) indique un instant d'apparition d'événement entre un premier instant réel et un deuxième instant réel.

20. Dispositif (80) selon l'une quelconque des revendications 15 à 19, comprenant en outre une troisième interface (96) destinée à recevoir des informations supplémentaires se rapportant à une pluralité de terminaux (84, 86) de points de vente, lesdites informations supplémentaires comprenant au moins l'un de ce qui suit :
- des informations d'emplacement d'au moins l'un de la pluralité de terminaux (10, 84, 86), lesdites informations d'emplacement comprenant une adresse physique et/ou un code postal du terminal (10, 84, 86) ;
- un numéro de série ou un code de série du terminal (10, 84, 86) ;
- un identificateur de terminal (60) associé à un utilisateur du terminal (10, 84, 86) ; et
- des informations d'utilisateur du terminal (10, 84, 86), lesdites informations d'utilisateur comprenant un identificateur d'un utilisateur du terminal (10, 84, 86), un premier instant réel et/ou un deuxième instant réel associés à l'utilisateur.

21. Dispositif (80) selon l'une quelconque des revendications 15 à 20, dans lequel le processeur (88) est en outre adapté pour
- sélectionner un deuxième ensemble de messages d'événement comportant un deuxième identificateur de terminal ;
- ordonner, conformément aux estampilles temporelles dans le deuxième ensemble de messages d'événement, les codes d'événement dans le deuxième ensemble de messages d'événement en une deuxième séquence ;
- lorsque la première séquence de codes d'événement est déterminée correspondre audit au moins un motif, déterminer si la deuxième séquence de codes d'événement correspond audit motif également ; et
- générer un deuxième message de notification, lorsque la deuxième séquence de codes d'événement est déterminée correspondre audit motif également.

22. Dispositif (80) selon l'une quelconque des revendications 15 à 21, comprenant en outre un moyen de mémorisation (92) destiné à mémoriser au moins l'un de ce qui suit :
- lesdits un ou plusieurs messages d'événement reçus par la première interface (82) ;
- lesdits un ou plusieurs motifs (100, 102).

23. Dispositif (80) selon l'une quelconque des revendications 20 à 22, comprenant en outre un moyen de mémorisation (92) destiné à mémoriser au moins lesdites informations supplémentaires reçues par la troisième interface (96).

24. Procédé (110) de traitement de messages d'événement, ledit message d'événement comprenant un code d'événement (64) associé à un événement s'étant produit sur une interface externe (26, 28, 30, 34) ou un logement (24) d'un terminal (10) d'un point de vente (POS), une estampille temporelle (62) indiquant l'instant auquel l'événement s'est produit, et au moins un identificateur de terminal (60), ledit procédé (110) comprenant les étapes consistant à :
- recevoir (112) un ou plusieurs desdits messages d'événement ;
- sélectionner (114) un ensemble de messages d'événement présentant un même identificateur de terminal (60) ;
- ordonner (116), conformément aux estampilles temporelles (62) dans l'ensemble sélectionné de messages d'événement, les codes d'événement (66) dans l'ensemble sélectionné de messages d'événement en une séquence (68) ;
- lire (118) au moins un motif (100, 102), ledit motif (100, 102) comprenant une séquence (104) de codes d'événement ;
- déterminer (120) si la séquence ordonnée (68) de codes d'événement correspond audit au moins un motif (100, 102) ; et
- générer (122) un message de notification, lorsqu'une correspondance est déterminée.

25. Produit-programme informatique comprenant des parties de code de programme destinées à réaliser les étapes du procédé (110) conformément à la revendication 24 lorsque le produit-programme est exécuté sur un ou plusieurs dispositifs informatiques.
